Europäisches Patentamt

European Patent Office

Office européen des brevets

(11) Publication number: **0 337 802 B1**

# EUROPEAN PATENT SPECIFICATION

(45) Date of publication of patent specification: **23.02.94**  (51) Int. Cl.⁵: **B29C 69/00**, B29C 49/00,
F28F 21/06, //B29L31:18

(21) Application number: **89303717.6**

(22) Date of filing: **14.04.89**

(54) Method for the manufacture of thermoplastic panel heat exchangers.

(30) Priority: **15.04.88 GB 8808944**

(43) Date of publication of application:
**18.10.89 Bulletin 89/42**

(45) Publication of the grant of the patent:
**23.02.94 Bulletin 94/08**

(84) Designated Contracting States:
**BE DE FR GB IT NL SE**

(56) References cited:
**EP-A- 0 286 400          EP-A- 0 287 271
DE-A- 1 952 785          GB-A- 1 465 564
GB-A- 1 487 440          US-A- 4 411 310**

(73) Proprietor: **Du Pont Canada Inc.
Box 2200,
Streetsville Postal Station
Mississauga, Ontario L5M 2H3(CA)**

Proprietor: **Cesaroni, Anthony Joseph
No. 9 Heathmore Court
Union Ville Ontario L3R 8JI(CA)**

(72) Inventor: **Shuster, Jerry Paul
1329 Cleaver Drive
Oakville Ontario L5M 2H3(CA)**
Inventor: **Cesaroni, Anthony Joseph
9 Heathmore Court
Unionville Ontario L3R 8J1(CA)**

(74) Representative: **Harrison, David Christopher
et al
MEWBURN ELLIS
2 Cursitor Street
London EC4A 1BO (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 337 802 B1

## Description

The present invention relates to a method for the manufacture of thermoplastic panel heat exchangers, especially a method for the manufacture of thermoplastic panel heat exchangers having inlet and outlet header means, and to the resultant panel heat exchangers.

Plate or panel heat exchangers are known and, in operation, are characterized by passage of air over the relatively planar surface of that type of heat exchanger. It has been traditional to fabricate heat exchangers, including panel heat exchangers, from a heat conductive metal e.g. aluminum. However, it is difficult to form metals, including aluminum, in an economical manner into thin, light weight, structures having adequate strength.

Plate or panel heat exchangers manufactured from thermoplastic polymers, and methods for the manufacture of such heat exchangers, are disclosed in European patent applications viz. Publication No.s 0 286 399 and 0 286 400 of A.J. Cesaroni and J.P. Shuster, published 1988 October 12, and No. 0 287 271 of A.J. Cesaroni, published 1988 October 19, and in EP-A-304261. The above patent applications disclose methods for the manufacture of thermoplastic panel heat exchangers, including header means to permit the flow of liquid into and out of the heat exchanger. EP-A-286400 shows a distributor having an axial passage and radial passages, and flanges lying outside the panels of the exchanger.

In US-A-4524757 tubular inlet and outlet pipes are moulded into edges of a panel heat exchanger to extend generally in the plane of the panel. In GB-A-1487440 a blow moulding technique is disclosed.

An improved method for the manufacture of a thermoplastic panel heat exchanger having header means has now been found.

Accordingly, the present invention provides a method for the manufacture of a panel heat exchanger from a thermoplastic polyamide, the heat exchanger consisting essentially of first and second panels (11) and inlet and outlet header means (19,22,24) with the panels being bonded together (15,15A,20,26,28) to define fluid flow passages (14,25,27) extending between the inlet and outlet header means, each of the panels being generally planar and formed from sheet of the polyamide having a thickness of less than 0.7 mm, the panels of the heat exchanger having orifices (17,18,21,23) therein cooperatively located at each of the inlet and outlet header means, each of said inlet and outlet header means including a distributor having planar ends, an axial flow passage and at least one radial flow passage, the axial flow passage of which is in register with the orifices

said method comprising the sequential steps of:

(a) placing the distributors and two sheets of the thermoplastic polyamide, at least one of which has been coated with a coating composition that will facilitate bonding of the sheets under the influence of heat, in face-to-face contact between moulds in a heated press, the surfaces of at least one of said moulds having a recessed pattern thereon corresponding to the fluid flow passages (14,25,27) of the panel heat exchanger, such that (i) the sheets are in contact with each other and with the planar ends of said distributors over substantially the entire face of the sheets, the distributors being in a spaced apart relationship corresponding to the location thereof in the panel heat exchanger and (ii) the coating is at the interface between the sheets; and

(b) heating and pressing said moulds to effect bonding between the sheets and between the sheets and the ends of the distributors and flushing an inert gas at a pressure greater than atmospheric pressure between said inlet and outlet header means, thereby forming fluid flow passages between the inlet and outlet header means and removing volatile matter from the fluid flow passages.

In other words, the invention includes coating at least one of the sheets with a composition for assisting bonding together of the sheets under heat and/or pressure and also of the sheets to the distributors (the distributors may also be so coated) and then juxtaposing the sheets with the distributors between them. This is sandwiched in a mould and heated. When the sheets are softened gas is forced between them. The sheets are expanded into grooves or the like in at least one of the moulds, whereby the fluid flow passages are formed. Meanwhile the influence of heat causes bonding together of edges of the sheets and of intermediate regions thereof. Orifices for inlet and outlet may have been formed in the sheets before moulding or may be cut into the sheets after moulding and bonding.

In other embodiments, the mould is attached, especially in a detachable manner, to a press platen, the mould having the recessed pattern therein.

In yet other embodiments, the coating composition is also applied to the ends of the distributors.

The present invention will be described with particular reference to the drawings in which:

Figure 1 is a plan view of a heat exchanger panel; and

Figures 2 and 3 are plan views of alternate embodiments of heat exchanger panels.

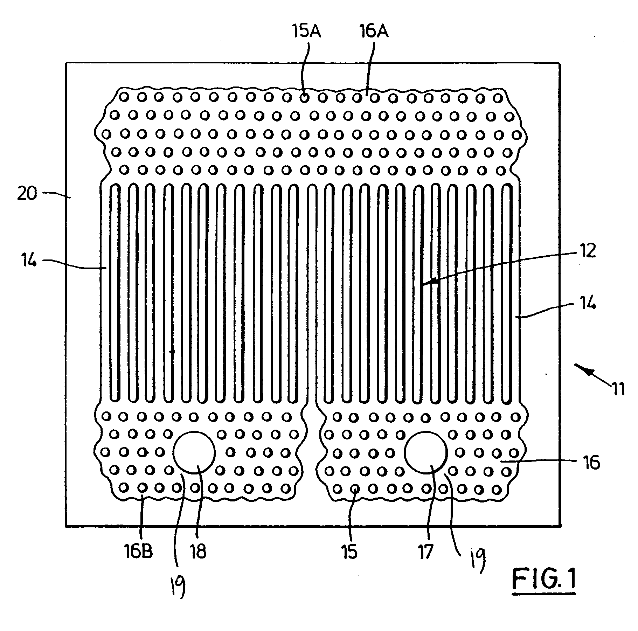

Figure 1 shows a panel, generally indicated by 11, of a heat exchanger; in the embodiment shown, the panel has a labyrinth 12 of fluid flow passages therein. Panel 11 also has an edge 20 extending completely around it, which when sealed to edge 20 of the other panel 11 forms the edge seal of the heat exchanger. The labyrinth 12 on panel 11 is an example of flow fluid passages that may be provided in a panel heat exchanger between the inlet and outlet means, in this instance from inlet orifice 17 through space 16 surrounding sealed sections 15, through channels 14 to the opposing end of the panel heat exchanger, through further space 16A surrounding sealed sections 15A and back through the remainder of channels 14, through space 16B and to outlet orifice 18. Header means are provided at 19 adjacent inlet orifice 17 and outlet orifice 18.

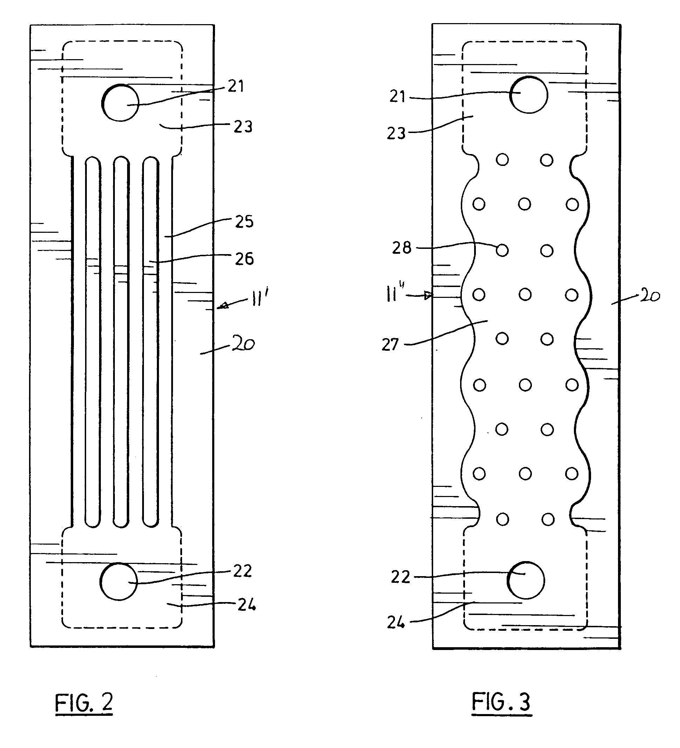

Figure 2 is an alternate embodiment of a heat exchanger panel 11. In this embodiment, orifices 21 and 22 for the inlet and outlet header means, whose position is generally indicated by 23 and 24, are located at opposite ends of the heat exchanger panel, which in the embodiment shown is elongated. Such an elongated heat exchanger panel is particularly adapted to be located in, for instance, the radiator of an automobile.

In Figure 2, the inlet and outlet header means 22 and 24 are connected by a series of substantially linear fluid flow passages 25 that are interspaced with similarly elongated sections 26 in which the panels of the heat exchanger are sealed together. In the alternate embodiment of Figure 3, the inlet and outlet header means 23 and 24 of panel 11 are connected by non-linear fluid-flow passages that are formed as channels 27 between isolated sealed sections 28 that, in the embodiment shown, are substantially circular in shape. The sealed sections 28 may be located in the heat exchanger panel in any desired pattern, but usually in a systematic pattern. The optimum pattern may depend in part on the fluid that is to be passed through the heat exchanger. For instance, some fluids e.g. water may be less susceptible to laminar flow in the heat exchanger than other fluids e.g. oil. The latter may require a fluid flow passage that is intended to cause a greater degree of turbulence in the flow than that required for other fluids e.g. water.

Sealed sections 28 have been described above as being circular in shape. However, other shapes may be used e.g. diamond, hexagonal, ovate, rectangular, herring bone patterns or the like.

In embodiments of the invention, means are provided in the panel to cause turbulence in the fluid. The means to cause turbulence may be on the external surface, in order to cause turbulence in the the fluid e.g. air or liquid passing over the surface of the panel heat exchanger for the exchange of heat. Means to cause turbulence may also be provided on the inner surface of the panel, to cause turbulence in the fluid passing through the heat exchanger. Such means may be more beneficial when the liquid passing through the heat exchanger is relatively viscous e.g. for oil rather than water. The means may be indentations, projections or the like that extend into the space through which fluid is intended to flow through the heat exchanger, and thereby cause turbulence in the fluid passing through the heat exchanger. Such means may be designed into the recessed pattern on the moulds so that indentations, projections or the like are formed during the fabrication of the heat exchanger.

Embodiments of the inlet and outlet header means are described in greater detail in the aforementioned EP-A-304261, but other inlet and outlet header means may be used.

The panel heat exchanger of the present invention may be assembled without the use of gaskets or the like, or using one or more gaskets or the like.

The invention has been described above with reference to a single panel heat exchanger. However, a plurality of heat exchangers may be used, the heat exchangers being arranged in parallel or more likely in series. In such event, the inlet and outlet header means, may be modified to accommodate a plurality of heat exchangers e.g. a stack of heat exchangers, and parallel or series flow of fluid through the heat exchangers, as described in EP-A-304261. It may be preferable to use spacers between the individual heat exchangers of a stack of heat exchangers; such spacers may be fabricated separately from the parts of the headers or fabricated as part thereof.

In the process of the present invention, at least one sheet that will form the panel of the heat exchanger is coated with a coating composition that will facilitate the bonding of the panels under the influence of heat. Coating of both sheets is preferred. In embodiments, the coating not only facilitates bonding between the opposing panels but also tends to soften the polymer in the regions where bonding does not occur and, on application of heated inert gas, thereby facilitating the forming of the fluid-flow passages; the inert gas tends to remove any volatile matter in the coating.

The sheets are formed from a polyamide, in which event the coating must facilitate the bonding of polyamide sheets. Although the sheet may be coated in a pattern corresponding to the pattern of the bonding of the sheets in the fabrication of the heat exchanger, it will normally be most convenient and preferred that the entire surface of the sheet be coated.

In the fabrication of the heat exchanger, the coated sheets of the first panel and of the second panel are brought into contact in a face-to-face manner, between the moulds of a press, with the coating at the interface between the sheets. The moulds have grooves corresponding to the labyrinth of passages to be formed in the panels, and a groove to accommodate the part of the panels corresponding to the location of the distributor i.e. the location of the inlet and outlet header means. The moulds of the press are heated e.g. to a temperature above the softening point of the polymer.

A distributor having at least one passage for axial flow from one face to the other of the heat exchanger but which will also allow radial flow outwardly into between the panels is inserted between the first and second panel, at the location of the inlet and outlet header means 17, 18, 23, 24. It may be for example a manifold but is preferably in the form of a distributor ring. The end faces of the distributor are planar and will normally be coated with the coating composition. On heating of the panels bonding is effected between the panels and the distributor, thereby locating the inlet and outlet header means preferably in a fluid tight seal. Examples of distributor are seen in the said EP-A-304261. Distributor rings will have one and may have two or more radial ports for radial flow.

During moulding a gas, usually an inert gas e.g. nitrogen is forced between the sheets, e.g. through the distributor ring, at a pressure above atmospheric pressure. A pressure of gas is thus provided in the fluid passages of the labyrinth so as to cause the passages to form; the two sections of the mould may be slowly moved apart after the polymer of the sheets has been heated so as to assist in the forming of the fluid flow passages. The gas is preferably flushed through the heat exchanger during and/or after the forming of the fluid flow passages, which tends to remove any volatile components of the coating, for example when the coating is a composition of benzyl alcohol, phenol and polyamide, as disclosed in the aforementioned European patent publication No. 0 287 271. Subsequently, prior to removal of the panels thus formed from the moulds and with gas pressure still being applied, the temperature of the panels should be increased to above the expected operating temperature of the resultant heat exchanger, in order to reduce distortion of the channels during use of the heat exchanger.

The panels of the heat exchanger require orifices at the location of the inlet and outlet header means. Such orifices may be provided in the sheets before the sheets are placed between the platens; such orifices are preferably cut from the sheets after any coating of the sheets. Alternatively, the orifices may be cut from the panels after forming e.g. by use of a trimming knife, hot wire or other hot tool.

As noted above, the mould is attached, preferably in a detachable manner, to a press platen, thereby facilitating expeditious changing of the pattern of the grooves in the panel. One or both surfaces of the platen surface that contact the sheet may have the pattern of grooves therein.

In a preferred embodiment, the coating is a homogeneous admixture of benzyl alcohol, phenol and polyamide, as is disclosed in the EP-A-0 287 271. Examples of alternative coatings are disclosed in EP-A-0 286 400. An alternate preferred coating is a homogeneous mixture of benzyl alcohol, phenol and methanol, especially in the ratio of about 12/80/8 by weight, as is disclosed in EP-A-0 287 271. In another embodiment, the coating is a mixture of trifluoroethanol and benzyl alcohol, especially in a ratio of about 80:20 by weight.

In embodiments of the invention, especially if the environment of use includes ethylene glycol, the sheets that form the panels are formed from a polyamide. The particular polyamide selected will depend primarily on the end use intended for the heat exchanger, especially the temperature of use and the environment of use, including the fluid that will be passed through the heat exchanger and the fluid e.g. air or liquid, external to the heat exchanger. In the case of use on a vehicle with air as the external fluid, the air may at times contain salt or other corrosive or abrasive matter. The nature of the polyamide composition used to form the sheets that become the panels of the heat exchanger may affect the efficiency of the heat exchanger, as it is believed that heat is capable of being dissipated from the heat exchanger by at least both convection and radiation. The polyamide may contain stabilizers, pigments, fillers and other additives known for use in polymer compositions.

Examples of such polyamides are the polyamides formed by the condensation polymerization of an aromatic or aliphatic dicarboxylic acid having 6-12 carbon atoms with an aliphatic primary diamine having 6-12 carbon atoms. Alternatively, the polyamide may be formed by condensation polymerization of an aliphatic lactam or alpha,omega aminocarboxylic acid having 6-12 carbon atoms. In addition, the polyamide may be formed by copolymerization of mixtures of such dicarboxylic acids, diamines, lactams and aminocarboxylic acids. Examples of dicarboxylic acids are 1,6-hexanedioic acid (adipic acid), 1,7-heptanedioic acid (pimelic acid), 1,8-octanedioic acid (suberic acid), 1,9-nonanedioic acid (azelaic acid), 1,10-decanedioic acid (sebacic acid), 1,12-dodecanedioic acid and terephthalic acid. Examples of diamines are 1,6-hexamethylene diamine, 1,8-octamethylene diamine, 1,10-decamethylene diamine and 1,12-dodecamethylene diamine. An example of a lactam is caprolactam. Examples of alpha,omega aminocarboxylic acids are amino octanoic acid, amino decanoic acid and amino dodecanoic acid. Preferred examples of the polyamides are polyhexamethylene adipamide and polycaprolactam, which are also known as nylon 66 and nylon 6, respectively. In preferred embodiments, the polymer is a polyamide that has been filled with glass-fibre, especially such a polymer that is a toughened polyamide e.g toughened by addition of polymers having elastomeric or rubbery properties.

The polymer of the distributor may be similar to that of the panels. However, different polymers may be used, provided that such polymers may be bonded to the polymers of the panels and/or coating on the panel, whichever contacts the distributor. Nonetheless, in preferred embodiments the distributor is fabricated from a so-called engineering polymer, especially a polyamide of the type discussed above.

Sheets of some polymers may exhibit shrinkage in the methods of the present invention, and the amount of shrinkage may vary even within the same general class of polymers e.g. polyamides. Thus the areas of the inlet and outlet header means viz. 21-24 in Figures 2 and 3, may need to be designed with some flexibility in positioning of the inlet and outlet header means, especially during the method of manufacture.

Laminated or coated materials may often be utilized with advantage in the fabrication of the panels, provided that the laminated or coated materials are capable of being formed into panels using the method disclosed herein. Such materials could comprise a layer providing the necessary physical resistance and inner and/or outer layers to provide resistance to the working fluids or contaminants. An example of the laminated materials is a layer of glass or other fibre in the form of a fabric, laminated between layers of polymer. Composite materials may also be used e.g. glass-filled and fibre-filled composites.

In embodiments in which the polymer is polyamide and each sheet is coated with the aforementioned benzyl alcohol/phenol/polyamide or benzyl alcohol/phenol/methanol composition, then it may be advantageous to insert a film of a polyamide between the first and second sheets. Such a film becomes bonded to the coating and loses its integrity but it has been observed that the use of such a film may result in the production of a panel heat exchanger of more uniform properties.

The panel heat exchangers formed by the method of the present invention have wall thicknesses, at least in those portions where transfer of heat will occur, of less than 0.7 mm, and especially in the range of 0.07-0.50 mm, particularly 0.12-0.30 mm. At such wall thicknesses, the transmission of heat through the wall becomes substantially independent of wall thickness, and thus wall thickness becomes a relatively minor or insignificant factor in the operating effectiveness of the heat exchanger. It is to be understood, however, that the polymer composition and the wall thickness must be selected so that the resultant heat exchanger will have the necessary physical properties to be acceptable for the intended end use.

The process of the present invention has been described with particular reference to the use of polyamides as the polymer used in the fabrication of the panel heat exchangers. It is to be understood, however, that other polymers may be used, the principal considerations being the environment of use of the panel heat exchanger, e.g. the properties of the fluid passing through and over the panels, the temperature and pressure of use and the like. Examples of other thermoplastic polymers that may be formed into sheets, at least one of which is coated to promote adhesion to the other sheet under the influence of heat, and used in the method of the present invention are fluorocarbon polymers, polyesters, thermoplastic and thermoset elastomers e.g. polyetherester elastomers, neoprene, chlorosulphonated polyethylene, and ethylene/propylene/diene (EPDM) elastomers, polyvinyl chloride and polyurethane.

In cold weather, especially below about -15°C, oil tends to become very viscous. On starting a motor under such conditions, the oil pressure may be substantially above normal operating pressures. In order to reduce the possibility of damage to the heat exchangers of the present invention under such circumstances, the heat exchangers may be equipped with a by-pass system so that cold viscous oil passes from the inlet to the outlet without passing through the fluid flow passages. This may be accomplished using a heat activated by-pass valve that passes cold oil through alternate passages in the heat exchanger that go directly from inlet to oulet until such time as the oil reaches a predetermined temperature at which time the valve directs the oil through the fluid flow passages of the heat exchanger.

The process of the present invention provides a versatile and relatively simple method of fabricating heat exchangers from thermoplastic polymers, especially from polyamides.

The heat exchangers may be used in a variety of end uses, depending on the polymer from which the heat exchanger has been fabricated and the intended environment of use of the heat exchanger. In particular, heat exchangers of the invention may be inserted into the so-called end-tanks of radiators of automobiles or similar vehicles, and used for the cooling of transmission oil. However, while the panel heat exchangers have been described with particular reference to use in automotive end-uses, it is to be understood that the panel heat exchangers fabricated by the process of the present invention may be used in a wide variety of end-uses. Examples of other uses include refrigeration, industrial heating and cooling, solar heating, and medical and consumer end-uses e.g. heating and/or cooling of beds, chairs and car seats.

The present invention is illustrated by the following examples:

Example I

A series of panel heat exhangers were formed from polyamide sheet using the method described above. The coating was a solution of benzyl alcohol, phenol and polyamide, which was applied to one of the two sheets placed between the moulds. The polyamide sheets had thicknesses of either 0.25 mm (10 mil) or 0.37 mm (15 mil). In addition, the panel heat exchangers had either a pattern of fluid flow passages as shown in Figure 2 i.e. linear passages, or as shown in Figure 3 i.e a labyrinth of passages. The panel heat exchangers were of approximately the same dimensions viz. 27 x 4.5 cm.

Oil having a specific heat of 0.523 was passed through the panel heat exchangers at a rate of 2.23 kg/min. The temperature of the oil entering and passing from the panel heat exchanger was measured. Water was passed over the panel heat exchanger at a rate of about 9 kg/min.

Further experimental details and the results obtained were as follows:

| Run No.* | 1 | 2 | 3 | 4 |
|---|---|---|---|---|
| Sheet thickness (mm) | 0.37 | 0.25 | 0.37 | 0.37 |
| Oil temperature (°C) | | | | |
|   In | 260.9 | 259.2 | 257.5 | 253.6 |
|   Out | 236.6 | 233.5 | 218.4 | 185.6 |
| Water temperature (°C) | 46 | 47 | 46 | 46 |
| Cooling Rate** | 62 | 66 | 101 | 169 |

6

\*       Runs 1 and 2 used heat exchangers having the pattern of Figure 2, and Run 3 used a heat exchanger having a pattern of Figure 3. Run 4 is a comparative run using a commercial metal heat exchanger of similar dimension to the heat exchangers of Runs 1-3

\*\*      The cooling rate is based on the difference in temperatures of the oil at the inlet and outlet of the heat exchanger, and is a measure of the effectiveness of the heat exchanger.

## Claims

1. A method for the manufacture of a panel heat exchanger from a thermoplastic polyamide, the heat exchanger consisting essentially of first and second panels (11) and inlet and outlet header means (19,22,24) with the panels being bonded together (15,15A,20,26,28) to define fluid flow passages (14,25,27) extending between the inlet and outlet header means, each of the panels being generally planar and formed from sheet of the polyamide having a thickness of less than 0.7 mm, the panels of the exchanger having orifices (17,18,21,23) therein cooperatively located at each of the inlet and outlet header means, each of said inlet and outlet header means including a distributor having planar ends, an axial flow passage and at least one radial flow passage, the axial flow passage of which is in register with the orifices

said method comprising the sequential steps of:

(a) placing the distributors and two sheets of the thermoplastic polyamide, at least one of which has been coated with a coating composition that will facilitate bonding of the sheets under the influence of heat, in face-to-face contact between moulds in a heated press, the surfaces of at least one of said moulds having a recessed pattern thereon corresponding to the fluid flow passages (14,25,27) of the panel heat exchanger, such that (i) the sheets are in contact with each other and with the planar ends of said distributors over substantially the entire face of the sheets, the distributors being in a spaced apart relationship corresponding to the location thereof in the panel heat exchanger and (ii) the coating is at the interface between the sheets; and

(b) heating and pressing said moulds to effect bonding between the sheets and between the sheets and the ends of the distributors and flushing an inert gas at a pressure greater than atmospheric pressure between said inlet and outlet header means, thereby forming fluid flow passages between the inlet and outlet header means and removing volatile matter from the fluid flow passages.

2. A method according to claim 1 in which the mould is attached to a press platen, the mould having the recessed pattern therein.

3. A method according to claim 2 in which the mould is attached to the press platen in a detachable manner.

4. A method according to any one of the preceding claims in which the coating composition is also applied to the ends of the distributors.

**5.** A method according to any one of the preceding claims in which the distributors have at least two radial flow passages.

**6.** A method according to any one of the preceding claims in which the orifices in the panels at the location of the header means are formed in the sheets prior to the sheets being placed between the moulds.

**7.** A method according to any one of claims 1 to 5 in which the orifices in the panels at the location of the header means are cut from the panels after the panels have been formed.

**8.** A method according to any one of the preceding claims in which the gas is nitrogen.

**9.** A method of any one of the preceding claims in which the polyamide is polyhexamethylene adipamide.

**Patentansprüche**

**1.** Verfahren zur Herstellung eines Plattenwärmeaustauschers aus einem thermoplastischen Polyamid, wobei der Wärmeaustauscher im wesentlichen aus einer ersten und einer zweiten Platte (11) und Einlaß- und Auslaßanschlüssen (19,22,24) besteht, wobei die Platten miteinander verbunden sind (15,15A,20,26,28), um Fluidströmungsdurchgänge (14,25,27) zu begrenzen, die sich zwischen den Einlaß- und Auslaßanschlüssen erstrecken, wobei jede der Platten im allgemeinen planar und aus Bahnmaterial aus dem Polyamid mit einer Dicke von weniger als 0,7 mm gebildet ist, wobei die Platten des Austauschers Öffnungen (17,18,21,23) darin zusammenwirkend an jedem der Einlaß- und Auslaßanschlüsse angeordnet aufweisen, wobei jeder der genannten Einlaß- und Auslaßanschlüsse einen Verteiler mit planaren Enden, einen axialen Strömungsdurchgang und zumindest einen radialen Strömungsdurchgang umfaßt, wobei der axiale Strömungsdurchgang davon mit den Öffnungen fluchtet, wobei das genannte Verfahren folgende aufeinanderfolgende Schritte umfaßt:
(a) das Anordnen der Verteiler und zwei Bahnen aus dem thermoplastischen Polyamid, von denen zumindest eine mit einer Beschichtungszusammensetzung beschichtet worden ist, die das Verbinden der Bahnen unter dem Einfluß von Wärme erleichtert, mit einander zugewandten Flächen zwischen Formen in einer erwärmten Presse, sodaß sie einander berühren, wobei die Oberfläche von zumindest einer der genannten Formen ein durch Ausnehmungen gebildetes Muster darauf ausgebildet hat, das den Fluidströmungsdurchgängen (14,25,27) des Plattenwärmeaustauschers entspricht, sodaß (i) die Bahnen einander und die planaren Enden der genannten Verteiler über im wesentlichen die gesamte Fläche der Bahnen berühren, wobei die Verteiler sich in einer beabstandeten Beziehung befinden, die ihrer Anordnung im Plattenwärmeaustauscher entspricht, und (ii) die Beschichtung sich an der Schnittfläche zwischen den Bahnen befindet; und
(b) das Erwärmen und Pressen der genannten Formen, um Bindung zwischen den Bahnen und zwischen den Bahnen und den Enden der Verteiler zu bewirken, und das Spülen zwischen den genannten Einlaß- und Auslaßanschlüssen mit einem inerten Gas bei einem Druck über dem atmosphärischen Druck, wodurch Fluidströmungsdurchgänge zwischen den Einlaß- und Auslaßanschlüssen gebildet werden und flüchtige Materie von den Fluidströmungsdurchgängen entfernt wird.

**2.** Verfahren nach Anspruch 1, bei dem die Form an einer Preßandruckplatte befestigt ist, wobei die Form das durch Ausnehmungen gebildete Muster darin aufweist.

**3.** Verfahren nach Anspruch 2, bei dem die Form auf abnehmbare Art an der Preßandruckplatte befestigt ist.

**4.** Verfahren nach einem der vorhergehenden Ansprüche, bei dem die Beschichtungszusammensetzung auch auf die Enden der Verteiler aufgetragen wird.

**5.** Verfahren nach einem der vorhergehenden Ansprüche, bei dem die Verteiler zumindest zwei radiale Strömungsdurchgänge aufweisen.

**6.** Verfahren nach einem der vorhergehenden Ansprüche, bei dem die Öffnungen in den Platten an der Position der Anschlüsse in den Bahnen ausgebildet werden, bevor die Bahnen zwischen den Formen angeordnet werden.

7. Verfahren nach einem der Ansprüche 1 bis 5, bei dem die Öffnungen in den Platten an der Position der Anschlüsse aus den Platten geschnitten werden, nachdem die Platten geformt worden sind.

8. Verfahren nach einem der vorhergehenden Ansprüche, bei dem das Gas Stickstoff ist.

9. Verfahren nach einem der vorhergehenden Ansprüche, bei dem das Polyamid Polyhexamethylenadipamid ist.

**Revendications**

1. Méthode pour la fabrication d'un échangeur de chaleur à panneaux à partir d'un polyamide thermoplastique, l'échangeur de chaleur consistant essentiellement en premier et second panneaux (11) et moyens col lecteurs d'entrée et de sortie (19, 22, 24), les panneaux étant liés ensemble (15,15A, 20, 26, 29) pour définir des passages d'écoulement de fluide (14, 25, 27) s'étendant entre les moyens collecteurs d'entrée et de sortie, chacun des panneaux étant généralement plan et formé d'une feuille de polyamide ayant une épaisseur de moins de 0,7 mm, les panneaux de l'échangeur ayant des orifices (17, 18, 21, 23) placés de façon coopérative à chacun des moyens collecteurs d'entrée et de sortie, chacun desdits moyens collecteurs d'entrée et de sortie comportant un distributeur ayant des extrémités planes et un passage d'écoulement axial et un passage d'écoulement radial, le passage d'écoulement radial étant en correspondance avec les orifices

   ladite méthode comprenant les étapes séquentielles de :

   (a) placer les distributeurs et deux feuilles du polyamide thermoplastique, dont au moins une a été enduite d'une composition de revêtement qui facilitera la liaison de la feuille sous l'influence de la chaleur, en contact face à face entre les moules, dans une presse chauffée, les sur faces d'au moins l'un desdits moules ayant un motif évidé correspondant aux passages d'écoulement de fluide (14, 25, 27) de l'échangeur de chaleur à panneaux, de manière que (i) les feuilles soient en contact l'une avec l'autre et avec les extrémités planes desdits distributeurs sensiblement sur toute la face des feuilles, les distributeurs étant en relation espacée correspondant à leur emplacement dans l'échangeur de chaleur à panneaux et(ii) le revêtement soit à l'interface entre les feuilles ; et

   (b) chauffer et presser lesdits moules pour effectuer une liaison entre les feuilles et entre les feuilles et les extrémités des distributeurs et faire passer un gaz inerte à une pression plus importante que la pression atmosphérique entre lesdits moyens collecteurs d'entrée et de sortie, pour ainsi former des passages d'écoulement de fluide entre les moyens collecteurs d'entrée et de sortie et enlever les matières volatiles des passages d'écoulement de fluide.

2. Méthode selon la revendication 1, où le moule est attaché à un plateau de presse, le moule contenant le motif évidé.

3. Méthode selon la revendication 2, où le moule est attaché au plateau de presse d'une manière détachable.

4. Méthode selon l'une quelconque des revendications précédentes, où la composition de revêtement s'applique également aux extrémités des distributeurs.

5. Méthode selon l'une quelconque des revendications précédentes, où les distributeurs ont au moins deux passages d'écoulement radial.

6. Méthode selon l'une quelconque des revendications précédentes, où les orifices dans les panneaux, à l'emplacement des moyens collecteurs sont formés dans les feuilles avant que les feuilles ne soient placées entre les moules.

7. Méthode selon l'une quelconque des revendications 1 à 5, où les orifices dans les panneaux à l'emplacement des moyens collecteurs sont découpés des panneaux après avoir formé les panneaux.

8. Méthode selon l'une quelconque des revendications précédentes, où le gaz est de l'azote.

9. Méthode selon l'une quelconque des revendications précédentes,où le polyamide est du polyhexaméthylène adipamide.

FIG.1

FIG. 2

FIG. 3